# EUROPÄISCHE PATENTSCHRIFT

(11) **EP 1 330 102 B1**
(45) Veröffentlichungstag und Bekanntmachung des Hinweises auf die Patenterteilung: **25.10.2006**
(21) Anmeldenummer: 03001047.4
(22) Anmeldetag: 17.01.2003
(51) Int. Cl.: H04M 1/04, H01H 9/02, B65D 5/42

(54) **Handyhalter**
Support for mobile phone
Porte-téléphone portable

(30) Priorität: 18.01.2002 DE 20200809 U
(43) Veröffentlichungstag der Anmeldung: 23.07.2003
(73) Patentinhaber: Roling, Markus, 83022 Rosenheim (DE); Zitzmann, Volker, 83022 Rosenheim (DE)
(72) Erfinder: Roling, Markus, 83022 Rosenheim (DE); Zitzmann, Volker, 83022 Rosenheim (DE)
(74) Vertreter: Becker Kurig Straus

(56) Entgegenhaltungen:
- DE-A- 19 709 538
- US-A- 2 726 835

## Beschreibung

Die vorliegende Erfindung betrifft einen Halter für Mobiltelefone und insbesondere einen zusammenlegbaren Halter für Mobiltelefone.

Halter für Mobiltelefone üblicher Bauart gibt es in den verschiedensten Formen und aus den verschiedensten Materialien. Üblicherweise bestehen solche Halter aus einem gegossenen Objekt in Form einer Ablage, eines kleinen Sessels, einer kleinen Figur oder dergleichen. Mobiltelefonhalter weisen üblicherweise eine Mulde bzw. eine Aussparung auf, in die ein Mobiltelefon relativ aufrecht abgelegt werden kann. Solche Mobiltelefonhalter sind üblicherweise aus einem oder mehren Einzelteilen zusammengesetzt und bemalt. Durch die Herstellung durch ein Gießverfahren ist der Materialbedarf solcher herkömmlicher Mobiltelefonhalter relativ hoch. Bekannte Mobiltelefonhalter sind meist recht sperrig und können nicht zusammengelegt werden.

Mobiltelefonhalter, die nicht gegossen werden, bestehen meistens aus mehreren Bauteilen, die durch Hilfsmittel wie zum Beispiel Schrauben oder Klebstoff miteinander verbunden werden. Die bisher veröffentlichten einteiligen Modelle müssen zwar nicht zusammengebaut werden, sind jedoch sehr sperrig. Daher sind herkömmliche Mobiltelefonhalter nicht als Beilage in (Werbe-) Briefen (Mailingverstärker) zu gebrauchen, da sie in Päckchen versendet werden müssen, die entschieden mehr Porto als gewöhnliche Briefe benötigen. Herkömmliche, in der Form unveränderliche Halter können nicht für andere Zwecke als zum Halten von Mobiltelefonen verwendet werden und benötigen daher auch unterwegs und auf Reisen erheblichen Platz.

Ein herkömmlicher Mobiltelefonhalter aus gegossenem Material wird beispielsweise in der Europäischen Patenschrift EP 0 447 715 B1 beschrieben. Diese Halterung für ein Mobiltelefon ist zum Einbau in ein Fahrzeug bestimmt, wobei die in den Zeichnungen offenbarten Ausführungsformen in herkömmlicher Spritzgusstechnik hergestellt und nicht zusammenlegbar sind. Der offenbarte Mobiltelefonhalter ist dazu bestimmt, fest in einem Automobil eingebaut zu werden.

Zusammenlegbare Mobiltelefonhalter sind im Stand der Technik überhaupt nicht bekannt.

Vorrichtungen zum Aufnehmen von Gegenständen zur Verkaufspräsentation, so genannte Displayelemente oder Verkaufs-Aufsteller, aus Karton und Wellpappe sind bekannt und beispielsweise in den Offenlegungsschriften DE 197 04 523 A1 und DE 197 40 321 A1 beschrieben. Die in den Offenlegungsschriften offenbarten Verkaufs-Displayelemente stellen im Wesentlichen Kartons bzw. Pappschachteln dar, um Ware zum Verkauf anzubieten. Beide Offenlegungsschriften beschreiben dabei Körper mit ebenen Seiten-, Front und Rückwänden, die Ware zum Transport und zum Verkauf aufnehmen können. Diese Display-Elemente sind ebenfalls nicht zusammenlegbar, da sie nach dem Verkauf der Ware üblicherweise entsorgt werden.

Keine der vorstehend offenbarten Mobiltelefonhalter oder Displayelemente können als zusammenlegbarer Mobiltelefonhalter bzw. Reise-Mobiltelefonhalter verwendet werden. _

Keines der im Stand der Technik offenbarten Displayelemente oder Mobiltelefonhalter oder Displayelemente kann sinnvoll als Werbegeschenk oder eigenständiger Werbeträger verwendet werden.

Es ist eine Aufgabe der vorliegenden Erfindung, einen einfachen und billigen (Reise-) Mobiltelefonhalter bereitzustellen.

Es ist weiterhin eine Aufgabe der vorliegenden Erfindung, einen Mobiltelefonhalter bereitzustellen, der auch als Lesezeichen verwendet werden kann.

Es ist daher eine Aufgabe der vorliegenden Erfindung einen neuartigen kostengünstigen Werbeträger bereitzustellen.

Es ist weiterhin eine Aufgabe der vorliegenden Erfindung einen preiswerten Mobiltelefonhalter bereitzustellen, der in seiner Ursprungsform so flach ist, dass er in einem gewöhnlichen, handelsüblichen Kuvert kostengünstig versendet werden kann, ohne jedoch durch diese flache Form in seiner Funktion eingeschränkt zu sein.

Diese Aufgaben werden mit einem Mobiltelefonhalter mit den in Anspruch 1 aufgeführten Merkmalen gelöst.

Die vorliegende Erfindung stellt einen Mobiltelefonhalter aus einen einteiligen flachen, flexiblen Körper bereit. Der flache, flexible Körper wird durch Einrollen des Halteroberteils und Einrasten einer Befestigungsvorrichtung zwischen dem Halteroberteil und dem Halterunterteil zu einem selbstständig stehenden Objekt zur Aufbewahrung eines Mobiltelefons. Der gekrümmte Körper bildet dabei eine Aufnahme für mindestens ein Mobiltelefon und weist eine Standvorrichtung auf, durch die der Halter stabil positioniert werden kann.

Mit der Erfindung wird erreicht, dass der Mobiltelefonhalter, wenn er nicht genutzt wird, durch seine Leichtigkeit und durch seine flache Form leicht zu verstauen und somit auch für unterwegs geeignet ist. Diese Form lässt zudem einen gegebenenfalls großen Werbeaufdruck zu, was ihn zusammen mit seiner Versandfähigkeit im Kuvert, beispielsweise als Dankeschön- oder Entschuldigungspräsent, für Firmen nutzbar und interessant macht.

Daher ist der erfindungsgemäße Mobiltelefonhalter als Beilage in (Werbe-) Briefen (Mailingverstärker) zu gebrauchen, da keine Päckchen mit hohem Porto versendet werden müssen, sondern als gewöhnliche Briefe verschickt werden können. Erfindungsgemäße Mobiltelefonhalter eignen sich zudem als Beilage in Katalogen, Zeitschriften oder Postwurfsendungen. Durch die Zusammenlegbarkeit kommt der erfindungsgemäße Mobiltelefonhalter auch der Ordnung auf dem Schreibtisch und zu Hause zugute, da er, wenn er nicht mehr gebraucht wird, sich einfach wieder in eine flache Form zurück verwandeln lässt und dann platzsparend an geeignete Gegenstände aufgeklippt werden kann.

Der erfindungsgemäße Mobiltelefonhalter kann zusammengelegt problemlos z.B. in einer Innentasche mitgeführt werden. Der erfindungsgemäße Mobiltelefonhalter kann sortenrein hergestellt werden, und ist damit sogar leicht recyclebar.

In einer beispielhaften Ausführungsform wird die Unterseite der Aufnahme für das Mobiltelefon durch einen gebogenen Abschnitt einer Seite oder eines Abschnitts des Körpers gebildet. Dabei ist es nicht entscheidend, ob dieser Teil von dem Unter- oder Oberteil des Körpers gebildet wird, sondern das Mobiltelefon liegt auf der Fläche des Körpers auf.

Bevorzugt wird die Aufnahme für das Mobiltelefon seitlich durch Seitenflächen des Körpers gebildet. Dadurch kann das Mobiltelefon einerseits mit seinem Gewicht flächig in der Aufnahme ruhen und wird seitlich durch eine Kante, die beispielsweise durch einen Einschnitt gebildet wird geführt.

Bevorzugt weist der Halter für Mobiltelefone weiterhin einen Abschnitt auf, der in der Aufnahme eine Stütze bildet. Dadurch kann sich das Mobiltelefon nach hinten abstützen, ohne sich nach vorne und hinten zwischen zwei Kanten verkeilen zu müssen.

Vorzugsweise weist die Standvorrichtung des Halters für Mobiltelefone mindestens ein Bein auf, das von der Aufnahme absteht. Damit kann sich der Halter nach vorne und/oder hinten abstützen und so selbst schmale und recht lange Mobiltelefone sicher halten. Ein Bein kann beispielsweise durch einen Einschnitt in einem gekrümmten Bereich verwirklicht werden, wobei die entlastete Spannung das Bein gerade (bzw. im Wesentlichen tangential) von dem gekrümmten Bereich abstehen lässt. Die Standvorrichtung des Halters kann auch aus einem Teil der Aufnahme gebildet werden, wobei der Halter selbst mit einem gekrümmten Bereich z.B. der Rückseite der Aufnahme auf dem Boden aufliegt.

Bei einer beispielhaften Ausführungsform des Mobiltelefonhalters kann die Rückseite des Halteroberteils durch die Befestigungsvorrichtung an der Vorderseite des Halterunterteils befestigt werden. Diese Ausführungsform weist im zusammengebauten oder aufgestellten Zustand also einen im Wesentlichen röhrenförmigen Abschnitt auf, wobei der Körper insgesamt im Wesentlichen eine Krümmung von 360° im Raum beschreibt.

In einer weiteren beispielhaften Ausführungsform ist der Körper mit Einschnitten versehen, die so angeordnet sind, dass die Seitenansicht des aufgestellten Halters im Wesentlichen ein Dreieck mit konkav gekrümmten Seiten aufweist.

Zusammen mit dem, in einem der vorstehenden Abschnitte beschriebenen röhrenförmigen Abschnitt kann eine Ausrührungsform der vorliegenden Erfindung dadurch beschrieben werden, dass die Seitenansicht des aufgestellten Halters einen α-förmigen Abschnitt aufweist.

Die Befestigungsvorrichtung kann beispielsweise als ein Haken bzw. eine Lasche und ein entsprechender Ausschnitt, als zwei Laschen oder als zwei Zapfen, als ein Druckknopf, zwei Löcher und ein Niete oder eine Schraube oder ein Klettband oder dergleichen ausgeführt sein. Die Befestigungsvorrichtung ist bevorzugt lösbar, um den Mobiltelefonhalter auch nach dem Aufstellen wieder zusammenlegen zu können. Die Befestigungsvorrichtung kann verstellbar sein, um unterschiedlich großen Mobiltelefonen Platz zu bieten. Die Befestigungsvorrichtung kann sogar als eine nicht mehr lösbare Klebeverbindung verwirklicht werden, sodass der Mobiltelefonhalter nach dem Verkauf bzw. Versand und dem Aufbau nicht mehr zusammenlegbar ist.

Ein anderes Beispiel einer Ausführungsform des Mobiltelefonhalters ist dadurch gekennzeichnet, dass der Körper im flachen Zustand geringere Abmessungen als ein Standardbrief-Kuvert aufweist. Somit kann der in einem Standardbrief-Kuvert verschickt werden, womit sich die Versandkosten im Vergleich zu einem Päckchen drastisch reduzieren lassen. Die flache Form ermöglicht es auch den Mobiltelefonhalter in Werbeaktionen als Postwurfsendung zu verteilen.

In einer anderen beispielhaften Ausführungsform kann der ebene Körper des Mobiltelefonhalters, wenn er nicht zusammengesteckt ist, durch seine flache Form als Lesezeichen mit Einmerker genutzt werden. In einer anderen beispielhaften Ausführungsform kann der flache Körper des Mobiltelefonhalters durch seine Einschnitte als Büroklammer verwendet werden. Weitere Vorteile seiner Ausführungsform sind die Möglichkeiten der Nutzung als Büroklammer. Aufgrund seiner besonders flachen Ausfertigung ist dieser Artikel auch in großen Mengen sehr platzsparend lagerbar.

Der Mobiltelefonhalter kann so ausgeführt sein, dass der Halter eine Aussparung aufweist, die das Einstecken eines Lade- oder Datenkabels in das Mobiltelefon ermöglicht. Ein weiterer Vorteil der Erfindung liegt in der Möglichkeit, das Mobiltelefon während des Ladevorgangs griffbereit in der Halterung zu lagern.

In einer anderen beispielhaften Ausführungsform ist der Halter für Mobiltelefone mit einer Schaltung zur optischen Anrufsignalisierung versehen. Beispielsweise kann die Schaltung integrierte Schaltkreise, Empfangsantennen, Dioden, Leuchtdioden, eine eigene Stromversorgung oder dergleichen aufweisen.

In einer anderen beispielhaften Ausführungsform ist der Halter für Mobiltelefone mit einer Vorrichtung zur Aufnahme eines Bildes versehen. Dies kann beispielsweise mittels einer Klarsichtklebefolie realisiert werden. Dabei kann ein Foto mit dem Mobiltelefonhalter (dauerhaft) verbunden werden. Beispielsweise kann der Mobiltelefonhalter mit einem Foto von der Größe eines Passbildes versehen werden. Je nach Ausführungsform kann das Bild im flachen oder aufgestellten Zustand sichtbar sein.

In einer anderen Ausführungsform kann der Mobiltelefonhalter ein integriertes Fotopapier aufweisen oder eine Oberflächenstruktur zeigen, die sich mit einem entsprechenden Drucker mit einem beliebigen (Foto-) Motiv bedrucken lässt.

In einer anderen beispielhaften Ausführungsform ist der Halter für Mobiltelefone lösbar mit einem Rahmen verbunden. Durch einen entsprechenden Rahmen kann der Halter für Mobiltelefone zusammen mit dem Rahmen die Abmessungen einer Postkate aufweisen und direkt, ohne eine weitere Verpackung, als eine Postkarte verschickt werden. Der Halter kann mit dem Rahmen beispielsweise durch eine Klebefolie verbunden oder einstückig ausgeführt, durch eine Perforation oder eine Sollbruchstelle mit den Rahmen ein einzelnes Teil bilden.

Ein Ausführungsbeispiel der Erfindung wird anhand der Figuren 1 bis 9 erläutert. Es zeigen:
Fig. 1 den Mobiltelefonhalter, flach, im flachen Zustand,
Fig. 2 den Mobiltelefonhalter, eingerollt, mit herausstehendem Zapfen, vor dem Einhaken,
Fig. 3 den Mobiltelefonhalter arretiert, in aufnahmebereitem Zustand,
Fig. 4 einen Mobiltelefonhalter, der im flachen Zustand die Form eines Bären aufweist,
Fig. 5 einen Mobiltelefonhalter, der im flachen Zustand die Form eines Nagetiers aufweist,
Fig. 6 mehrere Ausführungsformen von Mobiltelefonhaltern im flachen Zustand,
Fig. 7 eine Ausführungsform eines Mobiltelefonhalters mit einer Aufnahme für ein Foto,
Fig. 8 eine Ausführungsform eines Mobiltelefonhalters mit einer optischen Vorrichtung zur Anrufsignalisierung,
Fig. 9 eine Ausführungsform eines Mobiltelefonhalters für zwei Mobiltelefone, und
Fig. 10 eine Ausführungsform mit geschraubter Befestigungsvorrichtung darstellt.

In den Figuren und in der Beschreibung werden gleiche Bezugszeichen verwendet, um gleiche oder ähnliche Elemente zu bezeichnen.

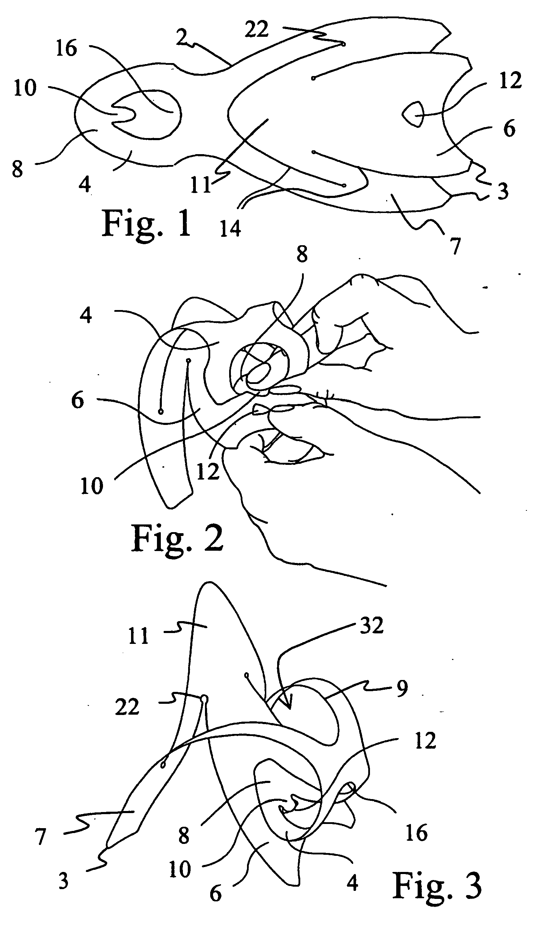

In Figur 1 ist der Halter im ursprünglichen, flachen Zustand dargestellt, in dem er versendet, oder als Lesezeichen bzw. Büroklammer benutzt werden kann. Die Figur 1 offenbart einen Körper 2, das Halteroberteil 4 das Halterunterteil 6, eine als ein Zapfen 10 und ein Lochausschnitt 12 ausgeführte Befestigungsvorrichtung, einige Einschnitte 14 und eine Aussparung 16. Die Einschnitte 14 enden in kleinen Löchern 22 die entlastend wirken und ein Ein- oder Weiterreißen der Einschnitte 14 verhindern. Es ist weiterhin das Kopfende des Körpers mit dem Bezugszeichen 8 bezeichnet. Es sind weiterhin Beine 7 mit Auflagepunkten 3 dargestellt. Der Körper 2 weist weiterhin einen Abschnitt auf, der als Stütze 11 für das Mobiltelefon wirken kann, wenn der Halter aufgebaut ist. Die im Wesentlichen flache Form des Körpers 2 kann in der Dicke variieren, um den unterschiedlichen Teilen des Halters eine entsprechende Biegefestigkeit zu geben. Dadurch kann quasi jede beliebige Form des röhrenförmigen Abschnitts erreicht werden.

Figur 2 zeigt das Halteroberteil 4 so auf dem Halterunterteil 6 eingerollt angeordnet, dass das Kopfende 8 des Halteroberteils 4 nach oben zeigt und dadurch der nach unten stehende Zapfen 10 zur Arretierung in den Lochausschnitt 12 eingesteckt werden kann.

Figur 3 stellt den fertig aufgebauten Mobiltelefonhalter dar, der bereit für die Aufnahme eines Mobiltelefons ist. Die Aufnahme 32 für das Mobiltelefon läuft hinten in die Stütze 11 aus und wird seitlich von der Kante 9 des Körpers 2 begrenzt. Ein in die Aufnahme gelegtes Mobiltelefon wird in dieser Ausführungsform unten von einem gebogenen Abschnitt des Oberteils 4 des Körpers 2 gehalten.

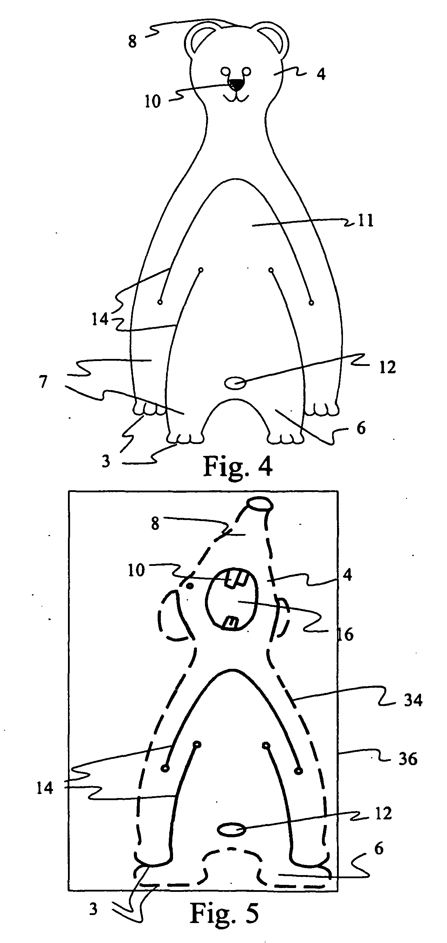

Fig. 4 stellt einen Mobiltelefonhalter dar, der im flachen Zustand die Form eines Bären aufweist. Durch einen entsprechenden Aufdruck kann der Bär mit einer entsprechenden Farbe eingefärbt werden. Die Oberflächenstruktur des Mobiltelefonhalters kann des weiteren eine Fell-artige Struktur aufweisen. In der dargestellten Ausführungsform stellt der Lochausschnitt 12 den Bauchnabel und der Zapfen 10 die Nase der Figur dar. Im aufgestellten Zustand steht der Halter auf den "Pfoten" der Figur.

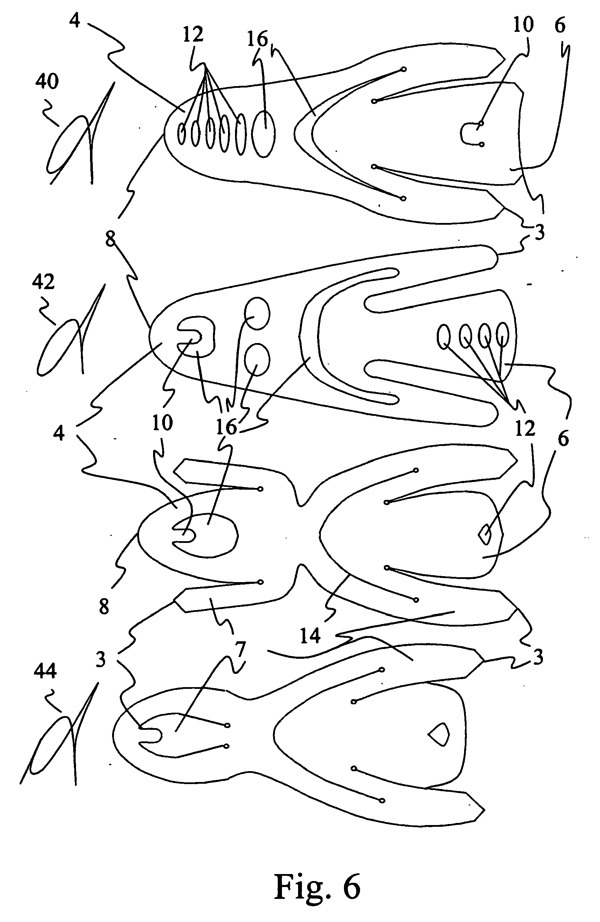

Fig. 5 zeigt einen Mobiltelefonhalter, der im flachen Zustand die Form eines Nagetiers aufweist. Im Unterschied zu dem Halter von Fig. 4 bildet der Zapfen die oberen Nagezähne des Nagetiers. Der Halter ist mit einer Perforation 34 oder einer Sollbruchstelle aus einem Rahmen 36 von etwa der Größe einer Postkate heraus gestanzt, und kann in dem Rahmen 36 als eine Postkarte verschickt werden. Durch herausbrechen der Figur aus dem Rahmen 36 kann der Körper aus dem Rahmen gelöst werden und zu einem Mobiltelefonhalter entsprechend der Fign. 1 bis 3 gebogen werden.

Fig. 6 zeigt mehrere Ausführungsformen von Mobiltelefonhaltern im flachen Zustand. Die oberste Figur stellt im Wesentlichen einen verstellbaren Mobiltelefonhalter dar, bei dem durch die verschiedenen Lochausschnitte 12 der Halter an unterschiedlich große, hohe oder dicke Mobiltelefone angepasst werden kann. In Unterschied zu den in den Fig. 1 bis 5 offenbarten Körpern sind die Lochausschnitte 12 am Halteroberteil 4 angebracht und der Zapfen 10 an dem Halterunterteil 6 angeordnet. Weiterhin ist der Einschnitt 14 aus Fig. 1 als Aussparung 16 ausgeführt, ohne im Wesentlichen in seiner Funktion abzuweichen. Einer der Ausschnitte 16 dient dazu es zu ermöglichen, ein Lade- oder Datenkabel mit dem Mobiltelefon zu verbinden, während das Mobiltelefon in dem Halter steht. Die Seitenansicht 40 verdeutlicht schematisch, wie der Halter auf den Auflagepunkten 3 steht, wenn er zusammengebaut ist.

Der zweite Körper von oben verdeutlicht besonders gut eine alternative und ebenfalls verstellbare Ausführungsform Form eines erfindungsgemäßen Mobiltelefonhalters. Im Gegensatz zu der vorstehenden Version steht dieser Halter nicht auf 4 "Beinen", sondern liegt mit dem Halterunter- bzw. Halteroberteil auf dem Boden auf, wenn er zusammengebaut ist, wie die Seitenansicht 42 schematisch verdeutlicht.

Die unteren beiden Körper stellen weitere mögliche Ausführungsformen mit 3 bzw. 4 Beinen dar. Im Gegensatz zu den oberen beiden Ausführungsformen stehen diese Ausführungsformen besonders stabil. Die Seitenansicht 44 verdeutlicht schematisch, wie der Halter auf den Auflagepunkten 3 steht, wenn er zusammengebaut ist.

Die Seitenansichten 40, 42 und 44 verdeutlichen besonders gut die röhrenförmigen, konkav dreieckigen und α-förmigen Abschnitte des aufgebauten Halters.

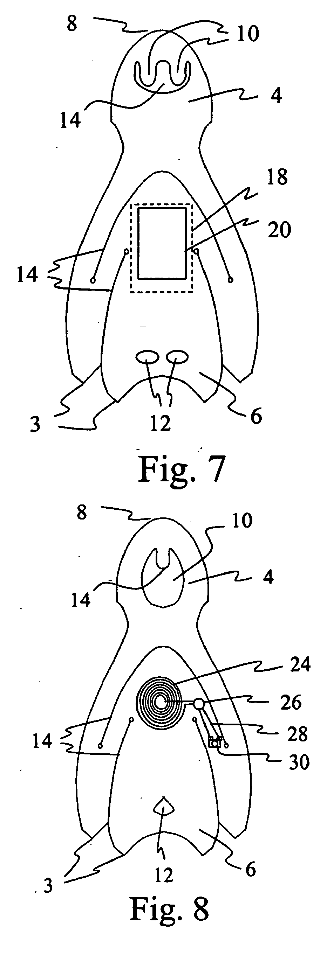

Fig. 7 stellt eine Ausführungsform eines Mobiltelefonhalters mit einer Aufnahme für ein Foto dar. Das Bild (und eventuell eine Locke oder eine gepresste Blume) kann beispielsweise mittels zweier Klebefolien und mit 1 bis 2 Abziehfolien and Mobiltelefonhalter fixiert werden. Dabei kann das Bild mit seiner Rückseite an dem Mobiltelefonhalter festgeklebt werden, und Schutzfolie kann darüber geklebt werden. Die Schutzfolie sollte dabei einen besonders durchsichtigen Kleber aufweisen. Das Bild kann sich nicht lösen, auch wenn der Mobiltelefonhalter zusammengerollt oder wieder entrollt wird. Die Aufnahmevorrichtung kann auch als ein, in den Mobiltelefonhalter eingearbeiteter konventioneller Bilderrahmen ausgeführt sein.

Fig. 8 zeigt eine Ausführungsform eines Mobiltelefonhalters mit einer Vorrichtung zur optischen Anrufsignalisierung. Der Halter kann beispielsweise mit einer integrierten Schaltung, einer Empfangsantenne, Dioden, Leuchtdioden oder dergleichen versehen sein. Wenn beispielsweise eine Antenne auf den Frequenzbereich eines Mobiltelefons abgestimmt ist, kann eine geeignete Schaltung genug Energie aus den abgestrahlten Radiowellen gewinnen, um einen kleinen Dioden-Flasher zu betreiben. Die Schaltungen können in dem Mobiltelefonhalter als gedruckte Schaltungen ausgeführt werden. Eine weitere Ausführungsform des Mobiltelefonhalters kann aus Klarsichtfolie ausgeführt werden, wobei sich durch einen Lichtleitereffekt, schöne Lichteffekte ergeben können, sodass der gesamte Halter zu leuchten schient.

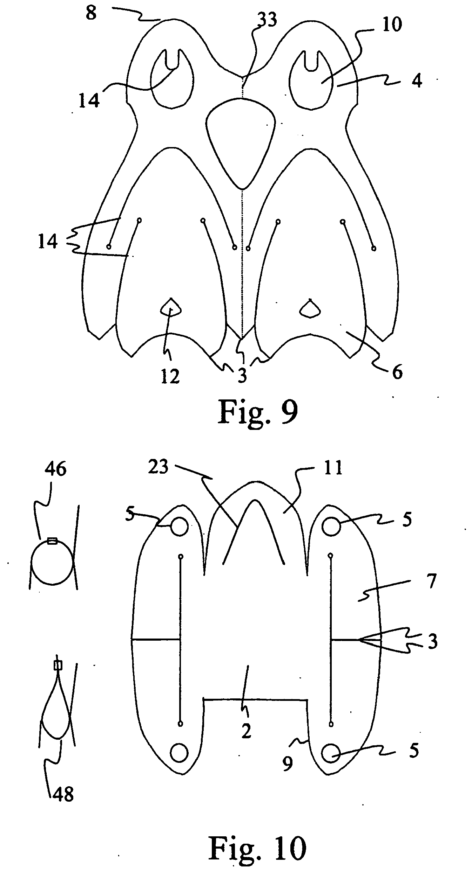

Fig. 9 stellt eine Ausführungsform eines Mobiltelefonhalters für zwei Mobiltelefone dar. Es sind ebenfalls Halter für mehr als zwei Mobiltelefone oder für ein Mobiltelefon und ein PDA (Personal Digital Assistant) denkbar. Eine Perforation 34 deutet an, dass der Halter für zwei Telefone auch trennbar sein kann. E ist auch eine Produktion des Halters als Meterware denkbar, wobei eine beliebige Anzahl von Mobiltelefonhaltern von einer Rolle abgerissen, abgeschnitten bzw. abgebrochen werden kann.

Figur 10 stellt eine Ausführungsform mit geschraubter Befestigungsvorrichtung dar. Diese spezielle Ausführungsform weist zwei Befestigungsvorrichtungen 5 auf. Diese sind durch Löcher angedeutet die mit Nieten oder Schrauben miteinander verbunden werden können. Löcher angedeutet die mit Nieten oder Schrauben miteinander verbunden werden können. Die dargestellte Ausführungsform kann entweder röhrenförmig oder tropfenförmig zusammengerollt werden. Im ersten Fall bildet sich eine runder abschnitt von dem die Beine 7 nach vorne und hinten abstehen. Der mittlere Bereich des Körpers (2) bildet ein die Aufnahme. Ein in die Aufnahme gestelltes Mobiltelefon wird von den Kanten 9 dran gehindert zur Seite zu fallen. Die in der in der Mitte oben dargestellte Lasche bildet eine Stütze an die sich das Mobiltelefon anlegen kann, wenn es in dem Halter abgelegt ist. In der dargestellte Halter kann auch tropfenförmig zusammengebaut werden. Dabei werden die beiden unteren Löcher einfach nach oben gefaltet und auf die oberen Löcher gelegt und miteinander verschraubt. Dabei liegen die Löcher mit jeweils der Vorderseite des Körpers (2) aufeinander. Damit lässt sich ein schmalerer Aufbau des Halters verwirklichen, in dem die Beine 7 dichter beieinander liegen. Der erste röhrenförmige Aufbau ist der schematischen Seitenansicht 46 dargestellt. Der zweite tropfenförmige Aufbau ist der schematischen Seitenansicht 48 dargestellt.

Der Halter gemäß der vorligenden Erfindung kann weiterhin Einschnitte 23 Aufweisen, die es gestatten, Zettel in art einer Büroklammer an dem aufgestellten Halter zu befestigen. Dadurch kannde aufgestellte halte auch als Zettel- bzw Visitenkartenhalter dienen. Dies Funktionalitä kann bispielsweis durch einen Einschnitt 23 im Bereich der Stütze 11 ausgefüthrt werden.

Es ist klar, das die vorliegende Erfindung auch als Halter für andere elektrische bzw. elektronische Kleingeräte bzw. Handgeräte verwendet werden kann, ohne den Schutzumfang der vorliegenden Erfindung zu verlassen. Der erfindungsgemäße Halter kann auch zum Halten von Brillenetuis oder ähnlich großen Gegenständen verwendet werden. Der vorlegende Halter kann aus einem einzelnen Material oder aus einem Verbundmaterial gefertigt sein. Der Halter kann, obgleich alle offenbarten Ausführungsformen keine besonderen Knickstellen zeigen, zusätzliche Knickstellen zur Verstärkung der Struktur oder der Form aufweisen. De Halter kann beispielsweise teilweise mit Draht verstärkt sein. Die Auflagestellen können mit einer Reibungs-erhöhenden Beschichtung versehen sein. Abschnitte des Körpers können mit Verzierungen versehen sein, die beispielsweise als extra Schlaufen oder Rohrabschnitte ausgeführt werden können.

### Bezugszeichenliste

- 2: Körper
- 3: Aufstandsflächen
- 4: Halteroberteil
- 5: Befestigungsvorrichtung
- 6: Halterunterteil
- 7: Bein
- 8: Kopfende
- 9: Seitenkante des Mobiltelefonhalters
- 10: Zapfen
- 11: Stütze
- 12: Lochausschnitt
- 14: Einschnitte
- 16: Aussparung
- 18: Abdeck/Klebefolie
- 20: Bild
- 22: Loch zur Verteilung der Spannung
- 23: Einschnitt
- 24: Antenne
- 26: Schaltung (integriert)
- 28: gedruckte Leitungen
- 30: Leuchtdiode (Flasher)
- 32: Aufnahme für Mobiltelefon
- 34: Perforation (angedeutet)
- 36: Rahmen
- 40-48: Seitenansichten (schematisch)

## Patentansprüche

1. Halter zur Aufnahme eines Mobiltelefons, aufweisend einen flachen flexiblen Körper (2) mit einem Halteroberteil (4) und einem Halterunterteil (6) und einer Befestigungsvorrichtung, wobei der flache, flexible Körper (2) unter Krümmung des Körpers (2) derart aufrollbar ist, dass das Halteroberteil (4) durch die Befestigungsvorrichtung (5) an dem Halterunterteil (6) im gekrümmten Zustand des Körpers (2) befestigt werden kann, wobei der gekrümmte Körper (2) eine Aufnahme (32) für das Mobiltelefon und eine Standvorrichtung aufweist, durch die der Halter stabil positioniert werden kann.

2. Halter für ein Mobiltelefon gemäß Anspruch 1, wobei die Unterseite der Aufnahme (32) für das Mobiltelefon durch einen gebogenen Abschnitt einer Seite des Körpers (2) gebildet wird.

3. Halter für ein Mobiltelefon gemäß Anspruch 1 oder 2, wobei die Aufnahme (32) für das Mobiltelefon seitlich durch Seitenflächen (9) des Körpers (2) gebildet wird.

4. Halter für Mobiltelefone gemäß einem der Ansprüche 1, 2 oder 3, wobei die Aufnahme eine Stütze (11) aufweist.

5. Halter für Mobiltelefone gemäß einem der vorstehenden Ansprüche, wobei die Standvorrichtung des Halters mindestens ein Bein (7) aufweist, das von der Aufnahme (32) absteht.

6. Halter für Mobiltelefone gemäß einem der vorstehenden Ansprüche, wobei die Befestigungsvorrichtung einen Zapfen (10) und eine dafür vorgesehene Aussparung (12) aufweist.

7. Halter für Mobiltelefone gemäß einem der vorstehenden Ansprüche, **dadurch gekennzeichnet, dass** die Rückseite des Halteroberteils (4) durch die Befestigungsvorrichtung an der Vorderseite des Halterunterteils (6) befestigt werden kann.

8. Halter für Mobiltelefone gemäß einem der vorstehenden Ansprüche, **dadurch gekennzeichnet, dass** die Vorderseite des Halteroberteils (4) durch die Befestigungsvorrichtung (5) an der Vorderseite des Halterunterteils (6) befestigt werden kann.

9. Halter für Mobiltelefone gemäß einem der vorstehenden Ansprüche, **dadurch gekennzeichnet, dass** der Körper (2) im flachen Zustand geringere Abmessungen als ein Standardbrief-Kuvert aufweist.

10. Halter für Mobiltelefone gemäß einem der vorstehenden Ansprüche, **dadurch gekennzeichnet, dass** der ebene Körper (2) durch seine flache Form als Lesezeichen mit Einmerker (10) genutzt werden kann.

11. Halter für Mobiltelefone gemäß einem der vorstehenden Ansprüche, **dadurch gekennzeichnet, dass** der flache Körper (2) durch seine Einschnitte (14, 23) als Büroklammer verwendet werden kann.

12. Halter für Mobiltelefone gemäß einem der vorstehenden Ansprüche, **dadurch gekennzeichnet, dass** der Halter (2) im aufnahmebereiten Zustand durch die Aussparung (16) das Einstecken eines Lade- oder Datenkabels in das Mobiltelefon ermöglicht.

13. Halter für Mobiltelefone gemäß einem der vorstehenden Ansprüche **dadurch gekennzeichnet, dass** in dem Körper (2) des Halters für ein Mobiltelefon eine Schaltung (26, 28) zur optischen Anrufsignalisierung eingearbeitet ist.

14. Halter für Mobiltelefone gemäß einem der vorstehenden Ansprüche **gekennzeichnet durch** eine Vorrichtung (20) zur Aufnahme eines Bildes (18).

15. Halter für Mobiltelefone gemäß einem der vorstehenden Ansprüche, **dadurch gekennzeichnet, dass** der Halter für Mobiltelefone lösbar mit einem Rahmen (36) verbunden ist.

## Claims

1. Holder for receiving a mobile phone, comprising a flat flexible body (2) with a holder upper part (4) and a holder lower part (6) and a securement device, wherein the flat flexible body (2) can be rolled up, with curvature of the body (2), in such a way that the holder upper part (4) can be secured by the securement device (5) to the holder lower part (6) in the curved state of the body (2), the curved body (2) comprising a receiver (32) for the mobile phone and a stand by means of which the holder can be stably positioned.

2. Holder for a mobile phone according to claim 1, wherein the lower side of the receiver (32) for the mobile phone is formed by a bent section of a side of the body (2).

3. Holder for a mobile phone according to claim 1 or 2, wherein the receiver (32) for the mobile phone is formed laterally by side faces (9) of the body (2).

4. Holder for mobile phones according to one of claims 1, 2 or 3, wherein the receiver has a support (11).

5. Holder for mobile phones according to one of the preceding claims, wherein the stand of the holder comprises at least one leg (7) that projects from the receiver (32).

6. Holder for mobile phones according to one of the preceding claims, wherein the securement device comprises a pin (10) and a recess (12) provided for this purpose.

7. Holder for mobile phones according to one of the preceding claims, **characterised in that** the rear side of the holder upper part (4) can be secured by means of the securement device to the front side of the holder lower part (6).

8. Holder for mobile phones according to one of the preceding claims, **characterised in that** the front side of the holder upper part (4) can be secured by the securement device (5) to the front side of the holder lower part (6) .

9. Holder for mobile phones according to one of the preceding claims, **characterised in that** the body (2) in the flat state has smaller dimensions than a standard-size envelope.

10. Holder for mobile phones according to one of the preceding claims, **characterised in that** the plane body (2) can be used in its flat shape as a bookmark with marks (10).

11. Holder for mobile phones according to one of the preceding claims, **characterised in that** the flat body (2) can be used by means of its indents (14, 23) as a paper clip.

12. Holder for mobile phones according to one of the preceding claims, **characterised in that** the holder (2) in the receiving state permits, due to the recess (16), the insertion of a charging or data cable into the mobile phone.

13. Holder for mobile phones according to one of the preceding claims, **characterised in that** a circuit (26, 28) for optical call signalling is incorporated into the body (2) of the holder for a mobile phone.

14. Holder for mobile phones according to one of the preceding claims, **characterised by** a device (20) for receiving an image (18).

15. Holder for mobile phones according to one of the preceding claims, **characterised in that** the holder for mobile phones is detachably connected to a frame (36).

## Revendications

1. Support pour recevoir un téléphone mobile, présentant un corps flexible plat (2) avec une partie supérieure de support (4) et une partie inférieure de support (6) et un dispositif de fixation, dans lequel le corps flexible plat (2) peut être enroulé en courbant le corps (2) de sorte que la partie supérieure de support (4) puisse être fixée par le dispositif de fixation (5) sur la partie inférieure de support (6) lorsque le corps (2) est recourbé, le corps (2) recourbé présente un logement (32) pour le téléphone mobile et un dispositif pour tenir debout par lequel le support peut être positionné de manière stable.

2. Support pour un téléphone mobile selon la revendication 1, dans lequel la face inférieure du logement (32) pour le téléphone mobile est formée par un segment courbe d'un côté du corps (2).

3. Support pour un téléphone mobile selon la revendication 1 ou la revendication 2, dans lequel le logement (32) pour le téléphone mobile est formé latéralement par des surfaces latérales (9) du corps (2).

4. Support pour téléphones mobiles selon l'une des revendications 1, 2 ou 3, dans lequel le logement comporte un appui (11).

5. Support pour téléphones mobiles selon l'une quelconque des revendications précédentes, dans lequel le dispositif pour tenir debout du support comporte au moins un pied (7) qui s'écarte du logement (32).

6. Support pour téléphones mobiles selon l'une quelconque des revendications précédentes, dans lequel le dispositif de fixation comporte un tourillon (10) et un évidement (12) prévu pour celui-ci.

7. Support pour téléphones mobiles selon l'une quelconque des revendications précédentes, **caractérisé en ce que** la face arrière de la partie supérieure du support (4) peut être fixée par le dispositif de fixation sur la face avant de la partie inférieure de support (6).

8. Support pour téléphones mobiles selon l'une quelconque des revendications précédentes, **caractérisé en ce que** la face avant de la partie supérieure de support (4) peut être fixée par le dispositif de fixation (5) sur la face avant de la partie inférieure de support (6).

9. Support pour téléphones mobiles selon l'une quelconque des revendications précédentes, **caractérisé en ce que** le corps (2), lorsqu'il est à plat, présente des dimensions plus réduites qu'une enveloppe de lettre standard.

10. Support pour téléphones mobiles selon l'une quelconque des revendications précédentes, **caractérisé en ce que** le corps plat (2) peut être utilisé, de par sa forme plate, en tant que marque-page avec signet (10).

11. Support pour téléphones mobiles selon l'une quelconque des revendications précédentes, **caractérisé en ce que** le corps plat (2) peut être utilisé par ses entailles (14, 23) en tant que trombone.

12. Support pour téléphones mobiles selon l'une quelconque des revendications précédentes, **caractérisé en ce que** le support (2), dans l'état où il est prêt à recevoir, permet l'insertion d'un câble de charge ou de données dans le téléphone mobile par l'évidement (16).

13. Support pour téléphones mobiles selon l'une quelconque des revendications précédentes, **caractérisé en ce qu'**un circuit (26, 28) est incorporé dans le corps (2) du support pour un téléphone mobile pour la signalisation d'appel optique.

14. Support pour téléphones mobiles selon l'une quelconque des revendications précédentes, **caractérisé par** un dispositif (20) pour recevoir une image (18).

15. Support pour téléphones mobiles selon l'une quelconque des revendications précédentes, **caractérisé en ce que** le support pour téléphones mobiles est relié de manière séparable à un cadre (36).
